# EUROPEAN PATENT SPECIFICATION

(11) **EP 3 475 458 B1**
(45) Date of publication and mention of the grant of the patent: **19.02.2020**
(21) Application number: 17730207.2
(22) Date of filing: 20.06.2017
(51) Int. Cl.: C22C 29/08, B22F 5/00

(54) **CORROSION AND FATIGUE RESISTANT CEMENTED CARBIDE PROCESS LINE TOOL**
KORROSIONS- UND ERMÜDUNGSBESTÄNDIGES SINTERKARBIDPRODUKTIONSLINIENWERKZEUG
OUTIL D'UNE LIGNE DE TRAITEMENT DE CARBURE CÉMENTÉ RÉSISTANT À LA CORROSION ET À LA FATIGUE

(30) Priority: 23.06.2016 EP 16175852
(43) Date of publication of application: 01.05.2019
(73) Proprietor: Hyperion Materials & Technologies (Sweden) AB, 126 80 Stockholm (SE)
(72) Inventor: DORVLO, Selassie, Olton Solihull B92 8RF (GB); HEWITT, Stephen, Coventry West Midlands CV4 9TH (GB)
(74) Representative: Neilson, Martin Mark
(86) International application number: PCT/EP2017/065018
(87) International publication number: WO 2017/220533

(56) References cited:
- EP-A1- 2 439 300
- WO-A1-01/31075
- WO-A1-2016/107842
- CN-A- 102 400 027
- CN-A- 102 517 484
- GB-A- 1 350 634
- QIANKUN ZHANG ET AL: "Effects of Mo additions on the corrosion behavior of WC-TiC-Ni hardmetals in acidic solutions", INTERNATIONAL JOURNAL OF REFRACTORY METALS AND HARD MATERIALS, vol. 38, 1 May 2013 (2013-05-01), pages 15-25, XP055327907, AMSTERDAM, NL ISSN: 0263-4368, DOI: 10.1016/j.ijrmhm.2012.12.003

## Description

### TECHNICAL FIELD/INDUSTRIAL APPLICABILITY

The present disclosure relates to a tool for metal forming comprising cemented carbide which has improved corrosion and fatigue resistance.

### BACKGROUND

A process line tool comprising cemented carbide could for example be used for a rotary cutter knife, which does not form part of the present invention or a metal forming tool.

Rotary cutter knifes are used to cut diaper and female care products which are typically made from non-woven fibers with a special absorbent layer. The cutting operation for cemented carbide rotary cutters is a continuous process. The cutter will rotate impacting against a counter rotating anvil. Typically rotary cutters will operate under compression loading. In service the cutting knife will operate at a rate of 1000 rpm and perform 10 to 20 million cuts before requiring re-sharpening of the edge. The initial "airjack" pressure for contact between the cutter and the anvil is ~2 Bar. This is increased after several million cuts to compensate for slight wear to get a clean cut; a maximum of 4 Bar also denotes extreme wear and the need to re-sharpen the knife. In the last five years productivity has become even more important. The cutting rate has increased to 1500 rpm in recent years and it is expected to reach 2000 rpm in the next 10 years. Damage to the knife is typically due to low cycle fatigue resulting from the continual impacts of the knife on the anvil. Extensive literature has shown that strength degradation of cemented carbides under cyclic loads is mainly related to fatigue resistance properties of the ductile binder phase. As the rate and the life time of the cutters increases, the carbide grades' resistance to crack initiation and propagation becomes even more important.

Damage to the rotary cutter knife edge also occurs due to corrosion from the perfumes and lotions used in the products being cut and also from the cooling agents used. The lotions contain abrasive nanograin size metallic oxides e.g. ZnO and SiO₂, making it both abrasive and corrosive. Corrosion damage can also occur due to the fabric being cut containing a high content of CaCl₂ which can hydrate in the presence of water, thereby forming acidic electrolytes that can corrode the hard metal. Corrosion damage will result in binder leaching which will lead to a reduced resistance to deformation and crack initiation during impact with the anvil and as a result the lifetime of the cutters will be decreased.

It is desirable to extend the lifetime of the rotary cutter tool as much as possible and keep the down time for service repairs to a minimum. This can be achieved by using cemented carbide which has a low and predictable wear rate. In order to achieve this it would be necessary to improve both the corrosion and the fatigue resistance of the cemented carbide used, where an improvement in one of these properties achieved by altering the binder composition is not at the expense of the other property.

The same combination of both corrosion and fatigue resistance is required for metal forming tools. Metal forming tools are tools used in the shaping or working of metals. These tools include can punches, wire drawing dies, tools for stamping, clamping and shaving metals. In these applications corrosion damage or wear, will cause the parts being made to go out of tolerance. An example is in can making where tools going out of tolerance will mean increased aluminium use. Aluminium is the biggest cost to a can manufacturing plant; therefore the lifetime of the tools is important for productivity and for the running costs of the plant. Typically a canning line will process 150 - 300 cans per minute and the tools are required to process over 5 million cans before requiring regrinding. Thus, the tools are required to have good hardness, stiffness and also good wear, erosion and fatigue resistance to resist the repeated impacts with the cans. Also the coolants used in these applications are slightly acidic, so corrosion resistance is a requirement for the cemented carbide grade. Similarly to rotary cutting operations, because of the tremendous volume of beverage cans manufactured every year, any extension in tool lifetimes and reduction in downtime will result in significant savings.

Typically in the past, the focus has been on improving the mechanical properties of the process line tools with Co binder alloys giving the best balance between hardness, toughness and fatigue strength over Ni binder alloys. However Co alloy binders are not very corrosion resistant therefore Ni alloy binders may be used instead to gain an improvement in corrosion resistance; however this is usually at the expense of the fatigue strength.

CN 102517484 A and CN 102400027 A both disclose hard alloys comprising nickel, chromium carbide, molybdenum and tungsten carbide as a remainder.

Therefore there is a need for a cemented carbide grade for process lines tools with both improved corrosion and fatigue resistance in order to improve the their service life and reliability.

### SUMMARY

One aspect of the present disclosure is to solve or at least reduce the above mentioned problems and drawbacks. The present disclosure provides a tool for metal forming comprising cemented carbide which has improved corrosion resistance and fatigue resistance.

### BRIEF DESCRIPTION OF THE DRAWINGS

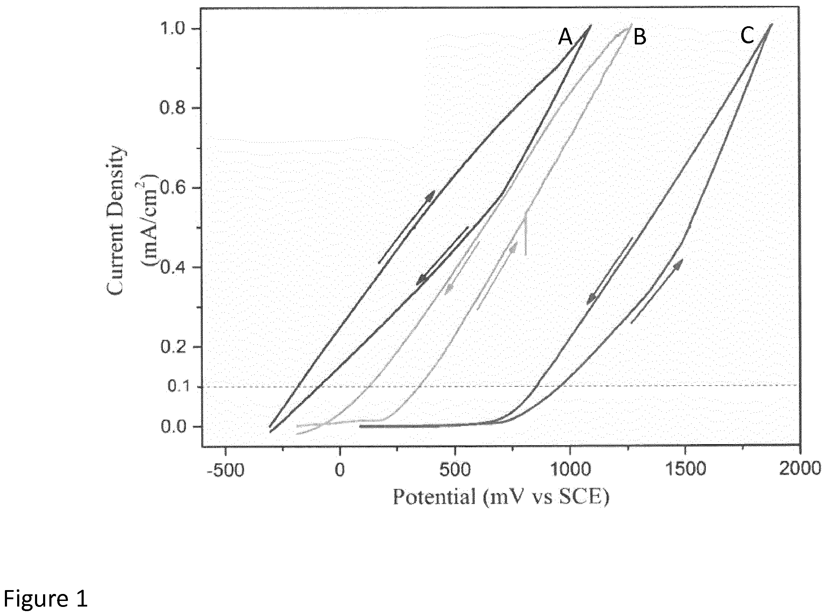

Figure 1: discloses the results of the potentiodynamic sweep tests for sample A, B and C in the examples.

### DETAILED DESCRIPTION

The present disclosure provides a tool for metal forming comprising a cemented carbide composition containing in wt % (weight%): 2.95 to 3.15 Ni; 0.1 to 2.5 Cr₃C₂ and 0.1 to 2.5 Mo and a balance of WC. Surprising it has been found with the cemented carbide composition disclosed in this application that a significant improvement in corrosion resistance can be achieve whilst still achieving good fatigue resistance.

Examples of a metal forming tools, but not limiting to, are can punches, wire drawing dies, tools for stamping, clamping and shaving metals.

In the present disclosure, Mo as disclosed hereinbefore or hereinafter may be in its elemental or carbide form.

In one embodiment, the metal forming tool has a cemented carbide composition comprising from about 0.1 to about 0.3 wt% Cr₃C₂, such as 0.2 wt%.

In one embodiment, the metal forming tool has a cemented carbide composition comprising from about 0.1 to about 0.3 wt% Mo, such as 0.2 wt%.

In one embodiment, the metal forming tool has a cemented carbide composition comprising from about 95.85 to about 96.85 wt% WC, such as 96.55 wt%.

In one embodiment, the metal forming tool has a cemented carbide composition comprising in wt % of; 3.05 Ni; 0.2 Cr₃C₂; 0.2 Mo and 96.55%WC.

In one embodiment, the metal forming tool has a cemented carbide has an average sintered tungsten carbide grain size of less than 0.5 µm, measured by linear intercept, such as an average of about 0.35 µm.

According to one reference embodiment, the present disclosure relates to a process line tool, wherein the process line tool is a rotary cutter or metal forming tool, having a composition of from about 9.1 to about 10.1 wt% Ni; from about 0.8 to about 1.0 wt% Cr₃C₂, from about 0.8 to about 1.0 wt% Mo; from about 87.9 to about 89.1 wt% WC and an average sintered WC grain size of less than 0.5 µm. The tool will have typical material properties of: a density from about 14.3 to about 14.5 g/cm³; a hardness of from about 1450 to 1600 HV30 and toughness from about 9.2 to 10.2MPa•√m.

According to an inventive embodiment, present disclosure relates to a metal forming tool, having a composition of from about 2.95 to about 3.15 wt% Ni; from about 0.1 to about 0.3 wt% Cr₃C₂, from about 0.1 to about 0.3 wt% Mo; from about 95.85 to about 97.25 wt% WC and an average sintered WC grain size of less than 0.5 µm. The tool will have typical material properties of: a density from about 15.1 to about 15.4 g/cm³; a hardness of from about 1850 to 2000 HV30 and toughness from about 5 to 6 MPa•√m.

Typically grades used in metal forming applications are submicron grades. Submicron grades give a good combination of high hardness, abrasion resistance and good edge retention properties. Submicron grades are defined a cemented carbide having a sintered tungsten carbide grain size of <1 µm.

The wear resistance and appropriate corrosion resistance of the cemented carbide grade can be achieved by using a binder formulated from a stainless steel alloy suitably matched to the composition of other steel components of the process line tool in order to minimise galvanic effects and to give superior corrosion resistance. When the cemented carbide component is joined to another stainless steel component it is found that the cemented carbide will corrode preferentially. This is because a galvanic cell is created between the cemented carbide component, the stainless steel and the corroding media. The corroding media may have a pH as low as 2.5 in an extreme case. Therefore the potential difference between the cemented carbide component and the stainless steel is reduced; meaning the driving force for corrosion is reduced.

It should be appreciated that the following examples are illustrative, non-limiting examples. The compositions and results of the embodiments are shown in Tables 1 and 2 below.

### EXAMPLES

Cemented carbide grades with the compositions shown in table 1 were prepared from powders forming the hard constituents and powders forming the binder. The powders were wet milled together with PEG 34 lubricant and afla anti -flocculating agent until a homogeneous mixture was obtained and granulated by drying. The dried powder was pressed on the Tox press to green bodies before sintering. Sintering was performed at 1360 -1410°C for about 1 hour in vacuum, followed by applying a high pressure, 50 bar Argon, at sintering temperature for about 30 minutes to obtain a dense structure before cooling.

**Table 1**

| **Ref** | **A (comparison)** | **B (comparison)** | **C** |
|---|---|---|---|
| WC | 89.5 | 89.85 | 88.6 |
| Starting WC grain size (µm) | 0.8 | 0.8 | 0.8 |
| Co (wt%) | 10 | 6.6 | 0 |
| Ni (wt%) | 0 | 2.2 | 9.6 |
| Mo (wt%) | 0 | 0.2 | 0.9 |
| Cr₃C₂ (wt%) | 0.5 | 1.15 | 0.9 |

The sintered test coupons have an average tungsten carbide grain size of about 0.35 µm, as measured using the linear intercept method.

Sample C is a reference example.

**Table 2**

| **Ref** | **A** | **B** | **C** |
|---|---|---|---|
| Density (g/cm³) | 14.4-14.6 | 14.3-14.6 | 14.3 - 14.5 |
| Hardness (Hv30) | 1550-1650 | 1600-1700 | 1450 - 1600 |
| Toughness (K1c) (Palmqvist) | 10.5-11.5 | 9.0-10.0 | 9.2 - 10.2 |

In the examples the powders were sourced from the following suppliers: Co from Umicore or Freeport, Ni from Inco, Mo from HC Starck and Cr₃C₂ from Zhuzhou or HC Starck.

The properties in table 2 have been measured according to standards used in the cemented carbide field, i.e. ISO 3369:1975 for the density and ISO 3878:1983 for the hardness. Sintered tungsten carbide grain sizes have been measured using the linear intercept method according to ISO 4499-2:2010.

Discs were pressed to an approximate diameter of 25 mm and a thickness of 5 mm and supplied with smooth surfaces. Potentiodynamic polarization tests were performed on samples A, B and C at room temperature using a modified ASTM G61 test. ASTM G61 covers a procedure for conducting potential dynamic polarization measurements. Modification was made to the media with the standard 3.5% NaCl solution replaced by aerated HCl with an acidity of pH 2.5. This media is representative of the acidity that the cemented carbide process line tool may need to work in. A further modification compared to the standard test is that an epoxy seal was used rather than a flushed port cell. The epoxy was used to seal the edges of the specimen in order to prevent crevice corrosion. Areas of approximately 5 cm² were left exposed. The specimens were cleaned and degreased in acetone in an ultrasonic bath and then dried in air before immersing them in the solution. The test solution was stirred at 600 rpm using a magnetic stirrer. The corrosion potential (E_{corr}) was monitored for 1 hour before performing the potentiodynamic sweeps in the anodic direction.

The potentiodynamic polarization sweep test results for sample A, B and C are shown in figure 1 and the electrochemical parameters derived from the potentiodynamic tests are shown in table 3.

The potentiodynamic anodic polarization test method is commonly used to rank the resistance of materials to localized corrosion in a given environment. The rationale for this test method is that the application of a positive potential to the specimen provides a driving force for the breakdown of the passive film and thereby initiates localized corrosion. By sweeping the potential at a constant rate in the anodic direction, the susceptibility to localized corrosion of the material can be evaluated from the potential at which the anodic current increases rapidly due to pitting of the surface which is known as the pitting potential, Eₚ. A more positive pitting potential signified a more corrosion resistant material. For materials with a very high resistance to pitting it is not possible to measure a pitting potential, as instead the entire surface will start to corrode through the passive layer through transpassive corrosion before a pitting potential is reached, this transpassive corrosion of the entire surface tends to occur at very high potentials not usually encountered in real application. The pitting potential has been defined as potential at which the current density first exceeds 0.1 mA/cm² during the potential sweep.

**Table 3**

| **Sample** | **Ecorr (mV SCE)** | **Eₚ (mV SCE)** |
|---|---|---|
| A | -306 | - |
| B | -187 | 347 |
| c | 89 | >871 |

Figure 1 and table 3 show that sample A has poor corrosion resistance, with no evidence of passivation and active corrosion from the start of the potential sweep. It can also be seen that the corrosion is much improved in sample B, a pitting potential of 347 mV (SCE) was observed. Further they show that there is significant further improvement in the corrosion resistance for sample C with only transpassive corrosion of the entire surface occurring at very high potentials before any pitting could occur.

## Claims

1. A tool for metal forming comprising a cemented carbide composition containing in wt % (weight%):
2.95 to 3.15 Ni;
0.1 to 2.5 Cr₃C₂;
0.1 to 2.5 Mo;
and a balance of WC;

2. The metal forming tool according to claim 1, wherein the composition comprises from 0.1 to 0.3 wt% Cr₃C₂.

3. The metal forming tool according to claims 1 or 2, wherein the composition comprises from 0.1 to 0.3 wt% Mo.

4. The metal forming tool according to any of claims 1 - 3, wherein the composition comprises of from 95.85 to 96.85 wt% WC.

5. The metal forming tool according to any of the previous claims, wherein the sintered tool has a tungsten carbide average grain size of less than 0.5 µm measured by linear intercept.

6. The metal forming tool according to any of the previous claims, wherein the sintered tool has a tungsten carbide average grain size of about 0.35µm measured by linear intercept.

## Patentansprüche

1. Werkzeug zur Metallformung, umfassend eine zementierte Carbidzusammensetzung, enthalten in Gew.-% (Gewichts-%):
2,95 bis 3,15 Ni;
0,1 bis 2,5 Cr₃C₂;
0,1 bis 2,5 Mo;
und wobei der Rest WC ist.

2. Werkzeug zur Metallformung gemäß Anspruch 1, wobei die Zusammensetzung 0,1 bis 0,3 Gew.-% Cr₃C₂ umfasst.

3. Werkzeug zur Metallformung gemäß Anspruch 1 oder 2, wobei die Zusammensetzung 0,1 bis 0,3 Gew.-% Mo umfasst.

4. Werkzeug zur Metallformung gemäß einem der Ansprüche 1 bis 3, wobei die Zusammensetzung 95,85 bis 96,85 Gew.-% WC umfasst.

5. Werkzeug zur Metallformung gemäß einem der vorstehenden Ansprüche, wobei das gesinterte Werkzeug eine durchschnittliche Korngröße von Wolframcarbid von weniger als 0,5 µm, gemessen durch Linear Intercept, aufweist.

6. Werkzeug zur Metallformung gemäß einem der vorstehenden Ansprüche, wobei das gesinterte Werkzeug eine durchschnittliche Korngröße von Wolframcarbid von etwa 0,35 µm, gemessen durch Linear Intercept, aufweist.

## Revendications

1. Outil de formage de métaux comprenant une composition de carbure cémenté contenant, en % en poids :
2,95 à 3,15 de Ni ;
0,1 à 2,5 de Cr₃C₂ ;
0,1 à 2,5 de Mo ;
et le complément de WC.

2. Outil de formage de métaux selon la revendication 1, dans lequel la composition comprend de 0,1 à 0,3 % en poids de Cr₃C₂.

3. Outil de formage de métaux selon les revendications 1 ou 2, dans lequel la composition comprend de 0,1 à 0,3 % en poids de Mo.

4. Outil de formage de métaux selon l'une quelconque des revendications 1 à 3, dans lequel la composition comprend de 95,85 à 96,85 % en poids de WC.

5. Outil de formage de métaux selon l'une quelconque des revendications précédentes, dans lequel l'outil fritté a une taille moyenne de grain de carbure de tungstène inférieure à 0,5 µm mesurée par intersection linéaire.

6. Outil de formage de métaux selon l'une quelconque des revendications précédentes, dans lequel l'outil fritté a une taille moyenne de grain de carbure de tungstène d'environ 0,35 µm mesurée par intersection linéaire.
